# EUROPÄISCHE PATENTANMELDUNG

(11) **EP 1 211 200 A1**
(43) Veröffentlichungstag der Anmeldung: **05.06.2002**
(21) Anmeldenummer: 01126081.7
(22) Anmeldetag: 02.11.2001
(51) Int. Cl.: B65G 47/244

(54) **Vorrichtung zum Wenden von Gegenständen**

(30) Priorität: 01.12.2000 DE 20020364 U
(71) Anmelder: Winkler + Dünnebier Aktiengesellschaft, 56564 Neuwied (DE)
(72) Erfinder: Munsch, Klaus, 56566 Neuwied (DE)
(74) Vertreter: Schieferdecker, Lutz, Dipl.-Ing.

(57) **Zusammenfassung**

Die Erfindung betrifft ein Verfahren und eine Vorrichtung zum Wenden von Gegenständen (2), bzw. von Produkten und/oder von Halbfabrikaten während der Herstellung und/oder vor dem Verpacken, insbesondere von Hygieneprodukten unter Verwendung einer Dreheinrichtung (3), die mindestens einen den Gegenstand (2) von einer zuführenden Transporteinrichtung (8) aufnehmenden und an eine weiterführende Transporteinrichtung (9) wieder abgebenden, relativ zur Dreheinrichtung (3) bewegbaren Mitnehmer (5) aufweist.

Der Kern der Erfindung besteht darin, daß die Bewegungsrichtung (12) der zu wendenden, auf der zuführenden Transporteinrichtung (8) angeordneten Gegenstände (2,2') und die Bewegungsrichtung (14) des Mitnehmers (5) im Zeitpunkt sowie an der Stelle (10) der Übernahme und die Bewegungsrichtung (15) die vom Mitnehmer (5) getragenen Gegenstände (2) im Zeitpunkt sowie an der Stelle (11) der Übergabe an die weiterführende Transporteinrichtung (9) jeweils unter einem von Null verschiedenen Winkel liegen.

## Beschreibung

Die Erfindung betrifft eine Vorrichtung zum Wenden von Gegenständen bzw. von Produkten während oder nach ihrer Herstellung oder auch vor dem Verpacken und insbesondere zum Wenden von Hygieneprodukten mit den Merkmalen des Oberbegriffes von Anspruch 1.

Eine Vorrichtung der genannten Art ist aus DE 4117296 A1 bekannt. Die Vorrichtung zum Wenden befindet sich zwischen einer zuführenden Transporteinrichtung und einer weiterführenden Transporteinrichtung, die unter einem Winkel von 90° zueinander angeordnet sind. Die zuführende Transporteinrichtung gibt das Produkt an die zum Wenden dienende Einrichtung ab, das sodann in der gewünschten Lage von der weiterführenden Transporteinrichtung übernommen wird. Die beiden Transporteinrichtungen stehen unter einem Winkel von 90° zueinander, wobei dort auch eine Anpassung an unterschiedliche Transportgeschwindigkeiten der beiden Transporteinrichtungen mit Hilfe der zum Wenden dienenden Vorrichtung erreicht wird.

Gegenüber dieser bekannten Vorrichtung liegt der Erfindung die Aufgabe zugrunde, die Einsatzmöglichkeiten und Brauchbarkeit sowie Verwendbarkeit einer derartigen Vorrichtung zu erhöhen.

Gelöst wird diese Aufgabe mit den Merkmalen des kennzeichnenden Teiles von Anspruch 1 dadurch, daß die Gegenstände bzw. Produkte dem Mitnehmer der Vorrichtung relativ zur ursprünglichen Bewegungsrichtungen unter einem von 0° verschiedenen Winkel zugeführt und von der Vorrichtung in eine weiterführende Transporteinrichtung unter einem von 0° verschiedenen Winkel abgegeben werden.

Dadurch ist es möglich, die Vorrichtung zum Wenden in geradlinig lineare Transporteinrichtungen einzubauen und nicht nur an solchen Stellen vorzusehen, die eine Weiterführung der Gegenstände bzw. Produkte unter einem Winkel von z. B. 90° erfordern.

Weitere Merkmale der Erfindung gehen aus Unteransprüchen und der Beschreibung im Zusammenhang mit der Zeichnung hervor.

Die Erfindung wird nachstehend anhand eines Ausführungsbeispieles, das in der Zeichnung dargestellt ist, näher beschrieben, dabei zeigen:
- Fig. 1: als Prinzipskizze eine Draufsicht mit einem ersten Produkt;
- Fig. 2: als Prinzipskizze eine Draufsicht mit einem anderen Produkt;
- Fig. 3: schematisch eine Seitenansicht mit der Dreheinrichtung in einer abgesenkten Stellung und

- Fig. 4: eine Ansicht wie in Fig. 3 mit der Dreheinrichtung in einer angehobenen Stellung

Eine Vorrichtung 1 zum Wenden von nachfolgend nur noch als Gegenstand 2 bezeichneten, in der Regel flachen Produkten oder Halbfabrikaten umfaßt eine Dreheinrichtung 3, die in hier nicht näher interessierender Weise um eine Achse 4 bewegbar gelagert und angetrieben ist. Die Dreheinrichtung 3 umfaßt mindestens einen Mitnehmer 5 z. B. in Gestalt eines Saughalters, der seinerseits in der Dreheinrichtung 3 um eine Achse 6 bewegbar gelagert und angetrieben ist. Dazu dient z. B. ein endlos umlaufender Riemen 7.

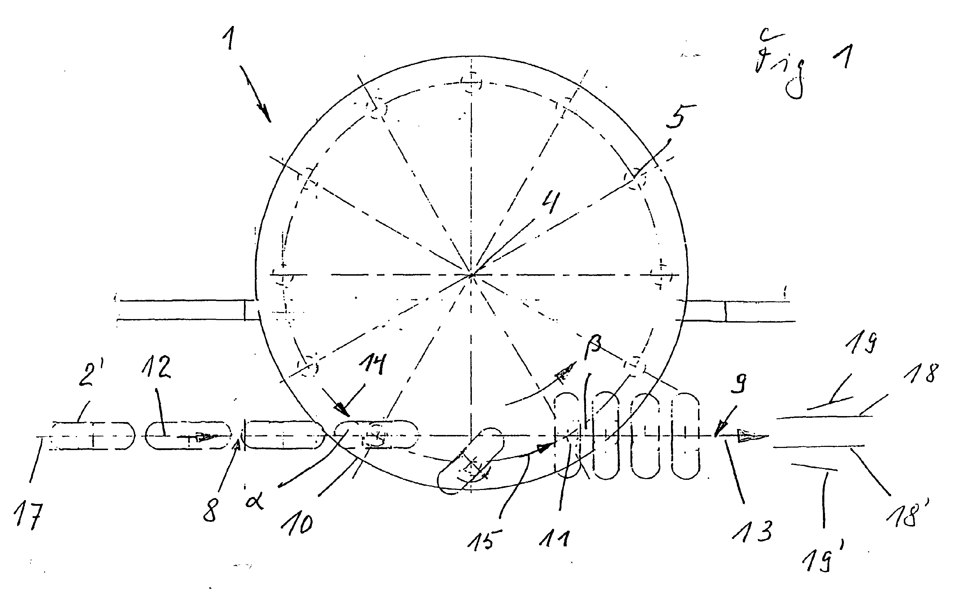

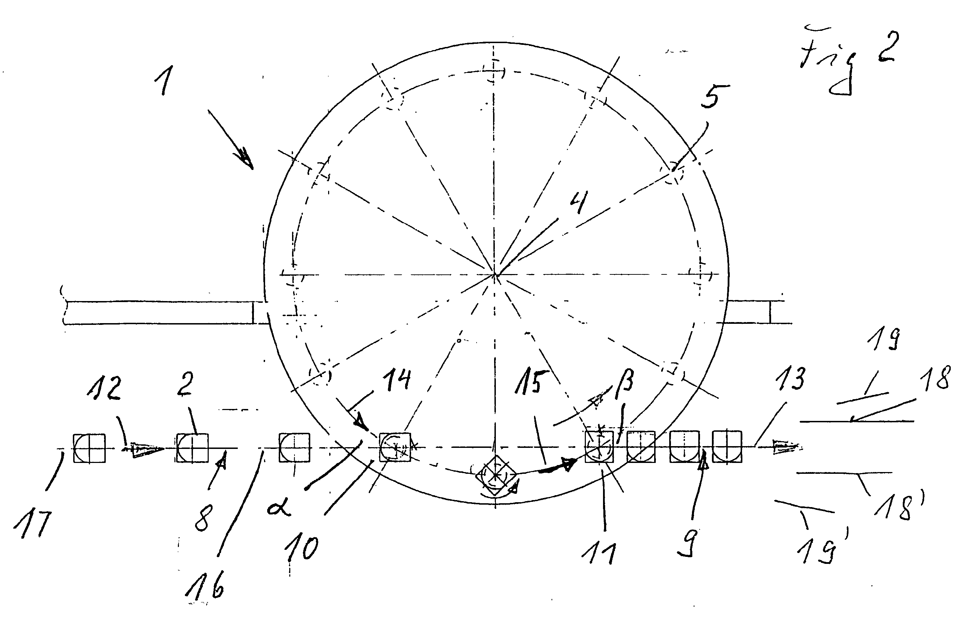

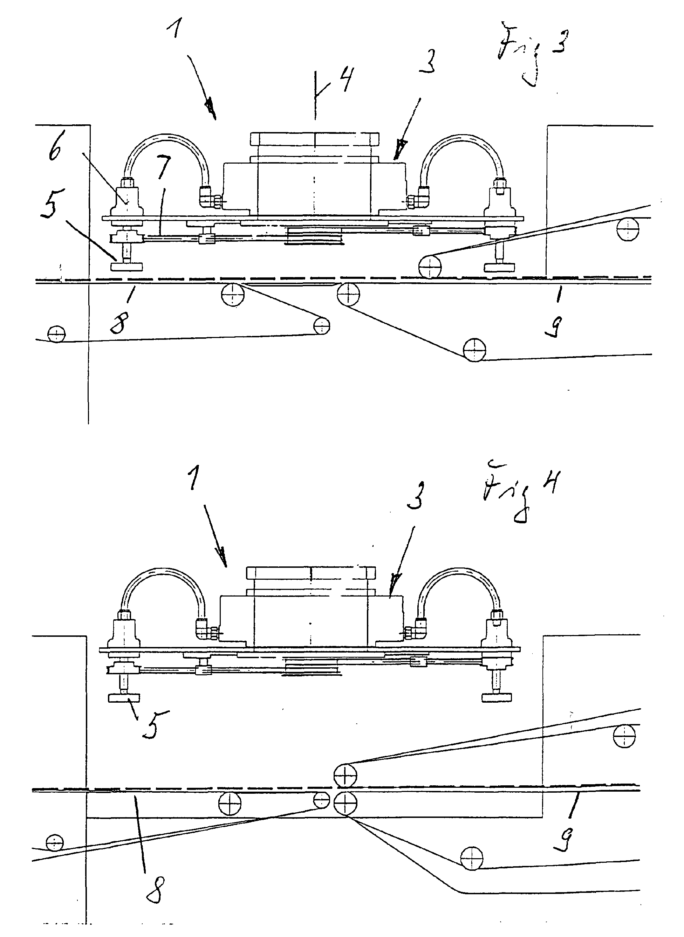

Der zum Wenden dienenden Vorrichtung 1 ist ferner eine zuführende Transporteinrichtung 8 und eine weiterführende Transporteinrichtung 9 zugeordnet. Sie können unterschiedlich gestaltet sein, wie aus den Figuren 3 und 4 hervorgeht. Die zuführende Transporteinrichtung 8 transportiert den zu wendenden Gegenstand 2 bis unmittelbar in den Aufnahmebereich bzw. an die Stelle 10, an der die Übernahme durch den Mitnehmer 5 erfolgt. In einem Abgabebereich bzw. an einer Stelle 11 übergibt der Mitnehmer 5 den Gegenstand 2 an die weiterführende Transporteinrichtung 9.

Im Bereich der Stellen 10 und 11 bilden die Bewegungsrichtungen 12 und 13 (siehe Pf. 12 und 13) der beiden Transporteinrichtungen 8 und 9 einen Winkel zu den Bewegungsrichtungen 14 und 15 des/der Mitnehmer 5. Dieser Winkel ist von Null verschieden. Die zu wendenden Gegenstände 2 werden daher nicht tangential zur Bewegungsrichtung 12 der Mitnehmer 5 zugeführt, sondern unter einem spitzen Winkel α zugeführt und unter einem spitzen Winkel β an die weiterführende Transporteinrichtung 9 abgegeben.

Dadurch ist es z. B. möglich, die beiden Transporteinrichtungen 8 und 9 längs einer einzigen, fluchtenden Achse 16 anzuordnen. Es ist aber auch möglich, die Achse 18 bzw. 18' einer weiterführenden Transporteinrichtung parallel zur Achse 16 der zuführenden Transporteinrichtung anzuordnen.

Es ist schließlich im Rahmen der Erfindung auch möglich, die Achse 19 bzw. 19' der weiterführenden Transporteinrichtung nicht fluchtend und auch nicht parallel zur Achse 16 anzuordnen, sondern unter einem spitzen Winkel zur Achse 16. In diesem Fall sind die Achsen 19 bzw. 19' unter einem von Null und auch von 90° abweichenden Winkel angeordnet, wie dies in Fig. 2 schematisch angedeutet ist.

Gemäß der Darstellung in Fig. 1 werden die Gegenstände 2' mit einer relativ großen Länge der Vorrichtung 1 zum Wenden zugeführt und dann in geringem Abstand nach der Abgabe an die weiterführende Transporteinrichtung 9 weiterbewegt. Gemäß Fig. 2 werden die mit relativ großem Abstand voneinander der Vorrichtung 1 zugeführten Gegenstände 2 in geringem Abstand voneinander von der weiterführenden Transporteinrichtung 9 nach dem Wenden weiterbewegt. Sowohl gemäß Fig. 1 als auch gemäß Fig. 2 werden die Gegenstände 2 und 2' um 90° gedreht und bewegen sich nach dem Wenden fluchtend in der gleichen Richtung weiter wie vor dem Wenden.

Zum Wenden werden die Gegenstände 2 und 2' jeweils spitzwinklig aus der vorangegangenen Bewegungsrichtung ausgelenkt.

Die Gegenstände 2 und 2' treffen nicht tangential auf den sich um die Achse 4 bewegenden Mitnehmer 5. Grundsätzlich gleiches gilt für den Zeitpunkt der Abgabe an die weiterführende Transporteinrichtung 9. Der Gegenstand 2, 2' erfährt daher sowohl im Aufnahmebereich 10 als auch im Abgabebereich 11 eine Beschleunigung quer zu seiner vorangegangenen Bewegungsrichtung. Der Gegenstand 2, 2' geht im Aufnahmebereich 10 aus der z. B. geradlinigen, zuführenden Bewegungsrichtung 12 in eine relativ zu dieser und zu der Achse 4 der Dreheinrichtung 3 auswärts gerichtete Kurvenbewegung über. Im Abgabebereich 11 ist die Kurvenbewegung des Mitnehmers 5 der Dreheinrichtung 3 relativ zur weiterführenden Bewegungsrichtung 13 der Gegenstände 2, 2' entgegengesetzt zur Bewegung im Aufnahmebereich 10 gerichtet.

Wie schließlich aus einem Vergleich der beiden Figuren 3 und 4 hervorgeht, ist die Dreheinrichtung 3 höhenverstellbar angeordnet. Die Mitnehmer 5 befinden sich daher entweder gemäß Fig. 3 unmittelbar über den Transporteinrichtungen 8 und 9 oder in einem deutlichen Abstand von diesen (Fig. 4). Diese Verstellbarkeit ist vor allem dann sinnvoll, wenn die Dreheinrichtung 3 bei einigen Produkten benötigt und bei anderen Produkten nicht benötigt wird. Durch Verschieben in die Höhe läßt sich die Funktion der Dreheinrichtung 3 daher ausschalten.

## Patentansprüche

1. Vorrichtung zum Wenden von Gegenständen (2), bzw. von Produkten und/oder von Halbfabrikaten während der Herstellung und/oder vor dem Verpacken, insbesondere von Hygieneprodukten unter Verwendung einer Dreheinrichtung (3), die mindestens einen den Gegenstand (2) von einer zuführenden Transporteinrichtung (8) aufnehmenden und an eine weiterführende Transporteinrichtung (9) wieder abgebenden, relativ zur Dreheinrichtung (3) bewegbaren Mitnehmer (5) aufweist, **gekennzeichnet durch**
eine Anordnung der einzelnen Komponenten derart,
a) daß die Bewegungsrichtung (12) der zu wendenden, auf der zuführenden Transporteinrichtung (8) angeordneten Gegenstände (2,2') und die Bewegungsrichtung (14) des Mitnehmers (5) im Zeitpunkt sowie an der Stelle (10) der Übernahme und
b) die Bewegungsrichtung (15) die vom Mitnehmer (5) getragenen Gegenstände (2) im Zeitpunkt sowie an der Stelle (11) der Übergabe an die weiterführende Transporteinrichtung (9) jeweils unter einem von Null verschiedenen Winkel liegen.

2. Vorrichtung nach Anspruch 1 zum Wenden von Gegenständen, **gekennzeichnet durch**
eine Anordnung der einzelnen Komponenten derart, daß die Gegenstände (2 ) aus der Bewegungsrichtung (12) der zuführenden Transporteinrichtung (8) zunächst ausgelenkt und sodann in eine mit der ursprünglichen Bewegungsrichtung (12) übereinstimmende, in eine dazu parallele (13) oder in eine dazu leicht winklig angeordnete Bewegungsrichtung mit einer Achse (18,18') bzw. (19,19') zurückbewegt werden, wobei eine Schwenkbewegung (das Wenden) zwischen der Aufnahme von der zuführenden Transporteinrichtung (8) bis zur Abgabe an die weiterführende Transporteinrichtung (9) erfolgt.

3. Vorrichtung nach Anspruch 1 zum Wenden von Gegenständen, **dadurch gekennzeichnet,**
**daß** der Gegenstand (2) nach der Übergabe an Mitnehmer (5) spitzwinkelig zu seiner ursprünglichen, vorhergegangenen Bewegungsrichtung weiterbewegbar ist.

4. Vorrichtung nach Anspruch 1 zum Wenden von Gegenständen, **dadurch gekennzeichnet,**
**daß** der Gegenstand (2) an der Stelle (11) der Abgabe an die weiterführende Transporteinrichtung (9) spitzwinkelig zu der vorhergegangenen Bewegungsrichtung weiterbewegbar ist.

5. Vorrichtung nach Anspruch 1 zum Wenden von Gegenstände, **dadurch gekennzeichnet,**
**daß** die Gegenstände nach der Abgabe an die weiterführende Transporteinrichtung (9) geradlinig in der ursprünglichen Bewegungsrichtung weiterbewegbar sind.
